# EUROPEAN PATENT SPECIFICATION

(11) **EP 2 495 110 B1**
(45) Date of publication and mention of the grant of the patent: **26.08.2015**
(21) Application number: 12157633.4
(22) Date of filing: 01.03.2012
(51) Int. Cl.: B60B 3/04, B21D 53/26, B60B 3/00

(54) **Wheel for vehicles**
Rad für Kraftfahrzeuge
Roue pour véhicules

(30) Priority: 03.03.2011 IT TO20110190
(43) Date of publication of application: 05.09.2012
(73) Proprietor: MW Italia S.r.l., 10098 Rivoli (TO) (IT)
(72) Inventor: Gotta, Giacomo, I-10080 LOCANA (Torino) (IT); Rovarino, Davide Fabio, I-10071 BORGARO TORINESE (Torino) (IT); Perris Magnetto, Gabriele, I-10098 RIVOLI (Torino) (IT)
(74) Representative: Vanzini, Christian

(56) References cited:
- WO-A1-2010/050582
- WO-A1-2010/107008
- US-A1- 2010 253 134

## Description

The present invention relates in general to a wheel for vehicles, comprising:
a shaped rim of metallic material, having an outer annular surface for supporting a tyre, and an inner annular surface, the rim having a cross-sectional profile including two lateral seats, one axially internal and one axially external, respectively, which are intended to receive corresponding beads of a tyre, and having a central channel-like portion recessed toward the axis of the wheel; said central portion being bounded by two arcuate connecting portions, one axially internal and one axially external, respectively, having their concave sides facing outwardly relative to the wheel;
a disk produced as a single sheet-metal piece by forming and punching, and having a central part adapted to be connected to an axle hub, and from which a plurality of angularly spaced-apart spokes extends outwardly; each spoke comprising a pair of spoke ribs interconnected by a spoke web; the outer ends of said spokes being interconnected by a peripheral connecting ring which extends concentrically with the axis of the wheel; said connecting ring comprising a cylindrical contact portion, which is substantially parallel to the axis of the wheel, and which is fitted against the inner annular surface of the rim at the central portion thereof; and a separating portion, axially adjacent to the contact portion and facing outwardly relative to the wheel; said separating portion having a curvilinear cross-sectional profile, which converges toward the axis of the wheel from said contact portion; corresponding windows of the disk being defined between the connecting ring and pairs of adjacent spokes; the radially outer edge of said windows being defined by said separating portion of the connecting ring.

Such a wheel is described in the publication EP 1 782 965, by the same Applicant. The structure of the wheel described in EP 1 782 965 allowed simplifying the manufacturing operations thereof, particularly the punching operations, compared to the previous wheels, without adversely affecting the performance of the thus-manufactured wheel.

In particular, the present invention relates to a wheel of the type defined at the beginning, wherein said contact portion and, at least partially, said separating portion of the connecting ring are arranged at a position axially inner than the axially external connecting portion adjacent to the central portion the rim;
in which said central part of the disk substantially comprises a substantially flat mounting portion and having a plurality of lug bolt receiving holes, and a connecting portion surrounding said mounting portion, in which said mounting portion is substantially annulus-shaped in plan view, and said connecting portion defines a revolution surface concentric to the axis of the wheel, having a curvilinear cross-sectional profile which extends axially outwardly relative to the wheel from said mounting portion;
and in which
said spoke ribs are comprised between said connecting portion of the disk central part and said separating portion of the connecting ring.

WO 2010/050582 and WO 2010/107008 disclose a wheel of such a type. US 2010/253134 discloses a wheel wherein the connecting ring comprises a contact portion and a separating portion.

An object of the present invention is to provide a wheel which is capable to achieve a performance improvement, particularly with reference to fatigue strength and run-out tolerances.

Such an object is achieved according to the invention by a wheel of the above defined type, in which contact portion of the connecting ring has a plurality of angularly spaced a part said local deformations at which the profile of said contact portion is locally recessed toward the axis of the wheel, defining thereby non-contact angular portions between the cotact portion of the connecting ring and the inner annular surface of the rim.

A wheel according to such a solution idea is characterized by a fatigue strength that is significantly higher than the conventional wheels, in which the contact portion of the connecting ring is close to the axially outer connecting portion, since this allows avoiding the fretting phenomena affecting the interface zone between the connecting ring and the rim, and generating cracks in the area of the axially outer connecting portion.

The arrangement of the spokes between the connecting portion of the disk central part and the separating portion of the connecting ring further allows improving the wheel performance as regards handling and rigidity, beside allowing the definition of a resting plane that is similar to the standard steel wheels (a continuous contact surface of the wheel disk with the vehicle hub), thus ensuring the same function on the other mechanical components composing the "grounding of the vehicle" as in the case of the standard steel wheels.

Preferred embodiments of the invention are defined in the dependent claims, which are to be meant as an integral part of the present description.

Further characteristics and advantages of the wheel according to the invention will be more clearly understood from the following detailed description of some embodiments of the finding, given with reference to the annexed drawings, which are provided by way of illustrative, non-limiting example only, and in which:
- Fig. 1 is a perspective view of a wheel according to the invention;
- Figs. 2 and 3 are a plan view of the wheel of Fig. 1, and an axial sectional view taken along the line III-III of Fig. 2, respectively;
- Figs. 4 and 5 are views in an enlarged scale of details of Fig. 3;
- Fig. 6 is a rear view of the wheel of Fig. 1;
- Fig. 7 is a perspective view of a disk of the wheel of Fig. 1;
- Figs. 8 and 9 are views, a general view and a view of a disk, respectively, of a second embodiment of the wheel according to the invention;
- Figs. 10 to 12 are further views of the wheel of Figs. 1 to 7; and
- Figs. 13 to 15 are views of a third embodiment of the wheel according to the invention.

In the drawings, a wheel for vehicles according to the invention is generally indicated by 1.

The wheel 1 comprises, in a *per se* known manner, a shaped rim 2 of metallic material, to which a disk 3 is welded, which is produced as a single sheet-metal piece by forming and punching.

The rim 2 has an outer annular surface 2a, for supporting a tyre (not shown) and an inner annular surface 2b.

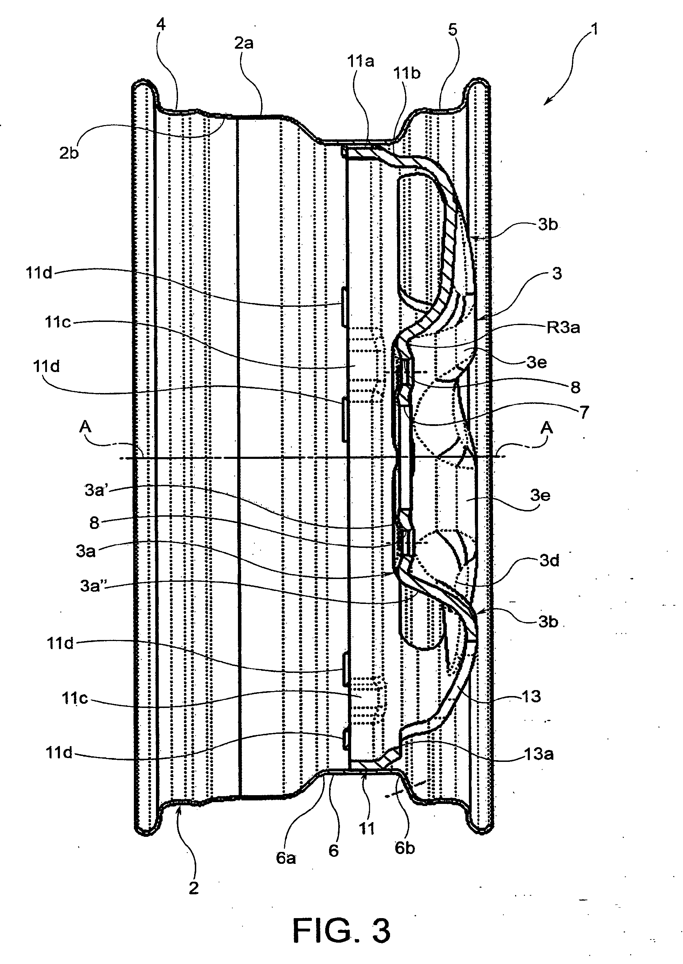

With particular reference to Figs. 3 to 5, the rim 2 has a cross-sectional profile including two lateral seats 4, 5, one being axially internal and one being axially external, respectively, which are intended to receive corresponding beads of a tyre, and a central channel-like portion 6 recessed toward the axis A-A of the wheel. The central portion 6 of the rim is bounded by two arcuate connecting portions 6a, 6b, one being axially internal and one being axially external, respectively, having their concave sides facing outwardly relative to the wheel.

Preferably, the rim 2 is obtained by a flow forming process.

The disk 3 has a central portion 3a, for the connection to an axle hub (not shown). In the illustrated embodiment, the central portion 3a of the disk 3 substantially comprises a substantially flat mounting portion 3a', and a connecting portion 3a" surrounding the mounting portion 3a'. The mounting portion 3a' has a central window 7 and, around that, a plurality of lug bolt-receiving holes 8. In plan view, such a mounting portion 3a' is substantially annulus-shaped. The connecting portion 3a" defines a revolution surface around the axis A-A of the wheel, which has a curvilinear cross-sectional profile that extends axially outwardly relative to the wheel 1 from the mounting portion 3a'.

In the illustrated embodiment, the "boundary" between the mounting portion 3a' and the connecting portion 3a" is defined by a circumferential groove R3a extending around the mounting portion 3a'.

A plurality of angularly spaced-apart spokes 3b extends outwardly from the connecting portion 3a" of the central part 3a of the disk 3.

The outer ends of the spokes 3b, at which the spokes 3b have a zone which is curved inwardly relative to the wheel, are interconnected by a peripheral connecting ring 11 which extends concentrically with the axis A-A of the wheel 1.

Corresponding windows 13 of the disk 3 are defined between the connecting ring 11 and pairs of adjacent spokes 3b, which, in the embodiment illustrated by way of example are, in plan view, pseudo-pentagonal shaped with rounded corners.

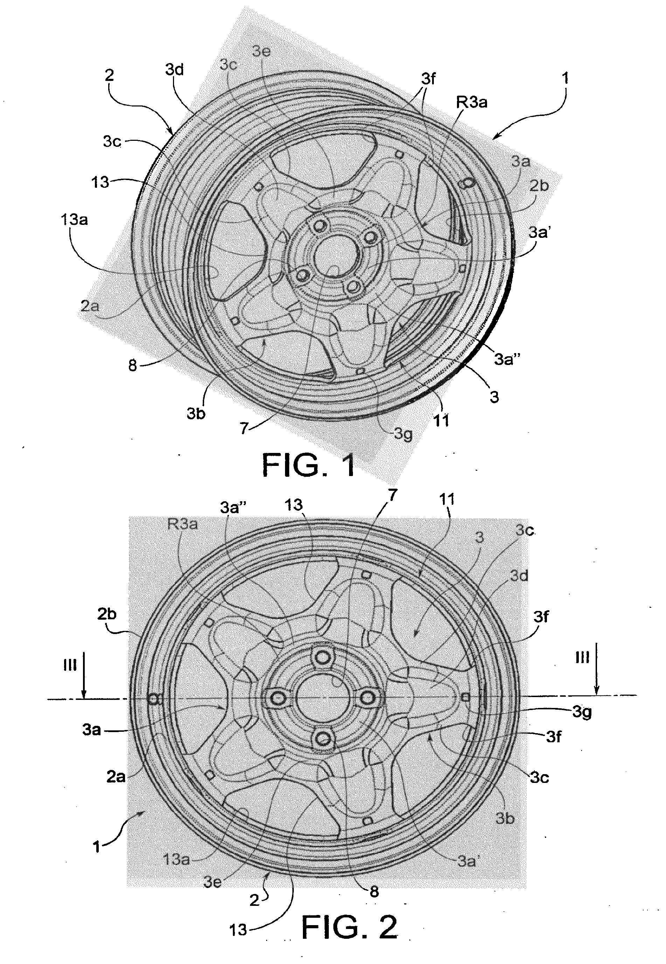

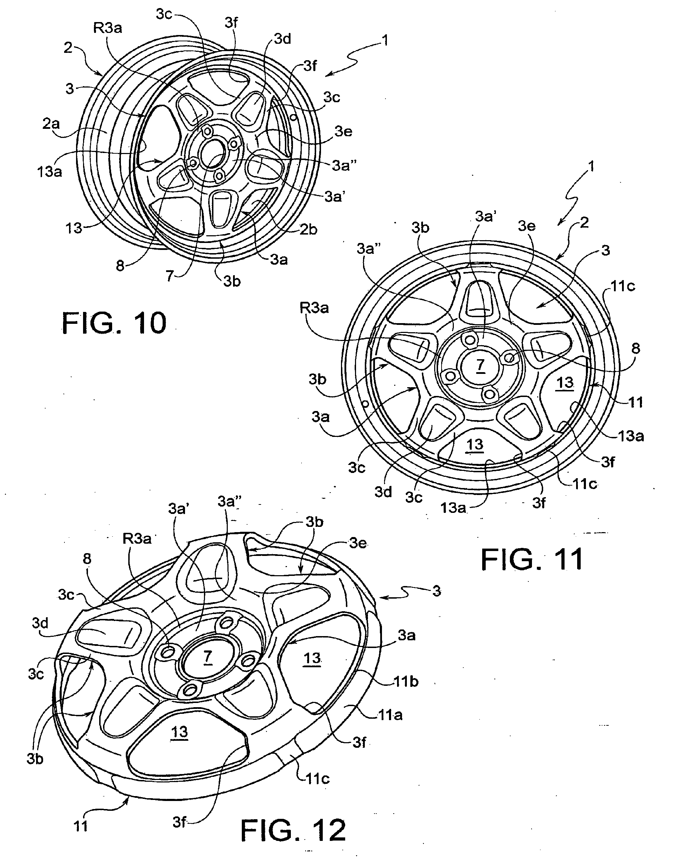

With particular reference to Figs. 1, 2, 7, and 10-12, each spoke 3b comprises a pair of spoke ribs 3c interconnected by a spoke web 3d. In plan view, the spoke ribs 3c are arranged obliquely relative to the radial centre line of the relative spokes 3b, and in particular, the two spoke ribs 3c of each spoke 3b are arranged so as to move closer one to another in the centrifugal direction.

Each spoke rib 3c is composed by a deformed stiffening part of the relative spoke 3b, projecting in the axial direction, and optionally also in the radial direction (in the peripheral areas of the disk at a bent zone of the spoke), with respect to the spoke web 3d adjacent thereto. In the circumferential direction, each spoke rib 3c borders one of the windows 13 on one side, and with the spoke web 3d adjacent thereto on the other side; therefore, it is comprised between the above-mentioned parts.

The oblique arrangement of the spoke ribs 3c allows having, compared to the parallel arrangement, a higher width of the windows 13, particularly at the radially peripheral part of such windows, with consequent higher air inflow to members, such as brakes, which are optionally arranged within the wheel rim. Furthermore, such arrangement facilitates the forming process, thus allowing an easier and less heavy deformation of the sheet.

Preferably, the outer ends of the spokes 3b, at the bent zone of such spokes, are shaped in such a way as to have side edge portions 3f which, when viewed in plan, extend straight to the separating portion 11b of the connecting ring 11, thus forming an angle > 0 with respect to the adjacent innermost edge portion of the spoke 3b. Such arrangement, which allows obtaining the pseudo-pentagonal shape of the windows 13, on one hand facilitates the window cutting operations during the punching process, and on the other hand increases the disk 3 strength at the windows 13, and, more generally, increases the wheel rigidity by adding material on the peripheral part of the disk.

In the embodiment in Figs. 1 to 7, and 10-12, the spoke ribs 3c extend inwardly to such an extent that the spoke ribs 3c, bounding on opposite sides each of the windows 13, join together so as to form a rib "nose" 3e, which is connected to the mounting portion 3a' through the connecting portion 3a".

As it can be seen in the Figures, the number of spokes 3b is different and unrelated to the number of holes 8 of the mounting portion 3a' intended for the lug bolts. Furthermore, such holes 8 are angularly unaligned with respect to the radial centre line of the spokes 3b. However, in non-illustrated implementation modes, the holes 8 could be the same number as the spokes 3b, and optionally each of such holes could be aligned with a respective one of the spokes 3b.

The unrelatedness between the number of windows and the number of spokes, and the consequent higher designing freedom, are allowed by the fact that the rib nose 3e associated to each pair of spokes 3b does not reach the mounting portion 3a' in which the holes 8 are obtained, but tapers in the connecting portion 3a" surrounding the mounting portion.

With reference in particular to Figs. 3 to 5, the connecting ring 11 of the disk 3 comprises a substantially cylindrical-shaped contact portion 11a, and which is substantially parallel to the axis A-A of the wheel 1. Such contact portion 11a is fitted against the inner annular surface 2b of the rim 2 at the central portion thereof.

The connecting ring 11 has a further portion 11b, which will be referred to as the separating portion herein below, which is axially adjacent to the cylindrical portion 11a and facing outwardly relative to the wheel 1. Such separating portion 11b has a curvilinear cross-sectional profile, which, starting from the adjacent contact portion 11a, converges towards the axis A-A of the wheel 1.

The radially outer edge 13a of the windows 13 is defined by the separating portion 11b of the connecting ring 11. Consequently, such radially outer edge 13a is arranged, relative to the axis A-A of the wheel, at a distance that is lower than that separating the cylindrical portion 11a from such axis.

With reference in particular to the Figs. 3 to 5, the contact portion 11a and, at least partially, the separating portion 11b of the connecting ring 11 are arranged at a position axially inner than the axially external connecting portion 6b adjacent to the central portion 6 of the rim. Due to such arrangement, it is possible to obtain a significantly higher fatigue strength than the conventional wheels, since it allows avoiding the fretting phenomena affecting the interface zone between the connecting ring and the rim, and generating cracks in the area of the axially outer connecting portion.

In the illustrated embodiment (see, in particular, Figs. 3 to 5), the separating portion 11b has a doubly arcuate cross-sectional profile, forming two consecutive curves, having respective concave sides, one facing the axis A-A of the wheel, and the other one facing outwardly relative to wheel.

Such a profile allows significantly incrementing the fatigue behaviour of the weld beads between the disk 3 and the rim, the arrangement of which will be illustrated in detail herein below. Furthermore, the double curvature provides a better definition of the contact portion of the connecting ring relative the inner part of the disk in which the spokes 3b and the windows 13 are obtained, with consequent improvement in terms of positioning accuracy of the disk 3 relative to the rim 2.

However, in non-illustrated implementation modes, the separating portion 11b of the connecting ring 11 could have a different profile, for example, a simply arcuate profile with a single curvature, as the one described in EP 1 782 965.

With reference in particular to Figs. 3 to 5 and 7, each spoke rib 3c, intended as a deformed and projecting part of a spoke 3b, comprised between a window 13 and a spoke web 3d adjacent thereto, ends externally at most at the separating portion 11b of the connecting ring 11.

Consequently, and in view of the peculiar conformation of the disk central part 3a described above, the spoke ribs 3c are comprised between the connecting portion 3a" of the central part 3a of the disk 3 and the separating portion 11b of the connecting ring, i.e., they do not reach, on one hand the mounting portion 3a' of the central part 3a of the disk, and on the other hand the contact portion 11a of the connecting ring.

In the peripheral area in which the spoke rib 3c ends, the projection thereby defined disappears, while tapering in a disk zone composed of a revolution surface portion which is substantially concentric with the axis A-A of the wheel.

In the embodiment of Figs. 1 to 7, and 10-11, the two spoke ribs 3c of each spoke end at a peripheral zone of the respective spoke 3b, arranged in a radially inner position relative to the bent zone of the spoke, while joining one to the other one so as to peripherally embed the spoke web 3d which is comprised therebetween.

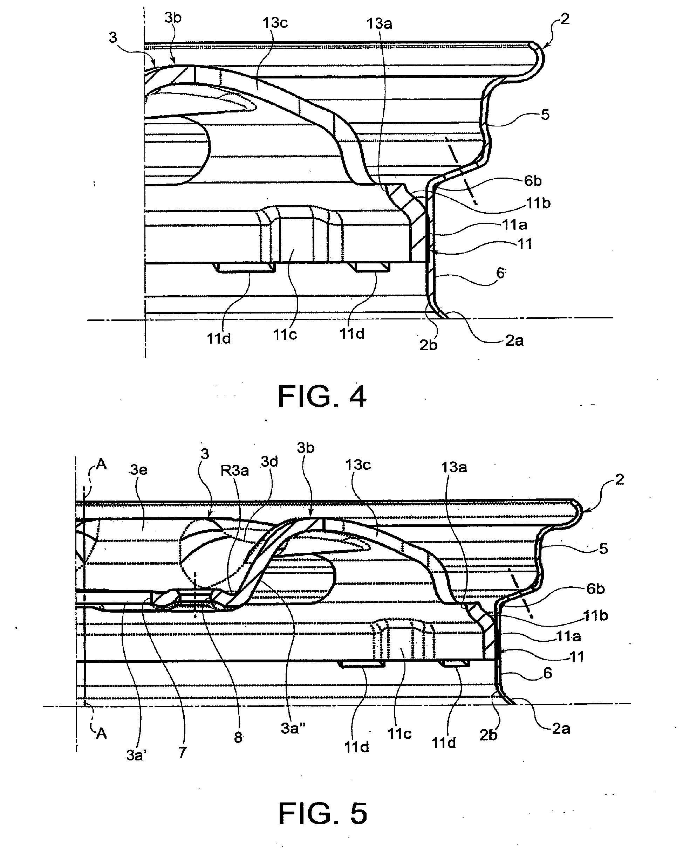

Preferably, and as it can be seen in particular in Fig. 5, the contact portion 11a of the connecting ring 11 of the disk 3 is arranged at a position axially inner relative to the disk 3 mounting portion 3a'.

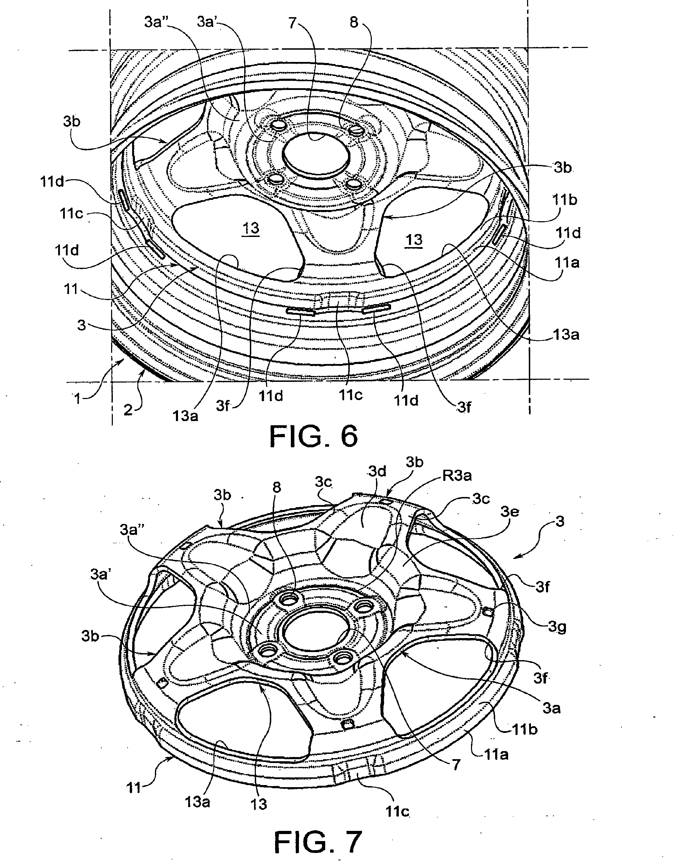

In the illustrated embodiment, and as it can be seen in particular in Figs. 6 and 7, the contact portion 11a of the connecting ring 11 has a plurality of angularly spaced-apart local deformations 11c, at which the contact portion 11a has recesses toward the axis A-A of the wheel with respect to the generally cylindrical profile of the contact portion 11a. Therefore, the above-mentioned local deformations 11c determine a non-continuous contact between the disk 3 and the rim 2, therefore the creation of peripheral passages therebetween.

Advantageously, such passages allow, during the cataphoretic painting of the wheel, easily discharge the paint, avoiding the undesired build-up thereof in the contact area between the disk 3 connecting ring 11 and the rim 2. Furthermore, the presence of the local recesses 11c provides a better definition of the contact portion of the connecting ring at specific angular areas thereof, with a consequent improvement in terms of positioning accuracy of the disk 3 relative to the rim 2.

In the illustrated embodiment, the above-mentioned local deformations 11c are the same number as the spokes 3b, and are arranged aligned thereto. According to non-illustrated implementation modes, such local deformations 11c could also be arranged at angular positions corresponding to the windows 13 angular positions.

As it can be seen in Figs. 3 and 6, the disk 3 is made integral to the rim 2 by means of a plurality of weld beads; in particular, there are two weld beads 11d for each spoke 3b, which are arranged, according to the circumferential direction, on opposite sides of the spoke. Such weld beads 11d can be arranged at the sides of the local deformations 11c, if present. According to non-illustrated implementation modes, the weld beads could be arranged in angular positions that are equidistant from one another.

In the illustrated embodiment, a locally flattened portion 3g is obtained on each spoke 3b, at a peripheral zone thereof, which is arranged in a radially inner position relative to the connecting ring 11 (and particularly, innermost with respect to the bent zone of the spoke).

The locally flattened portions 3g associated to the spokes 3b define reference and contact areas for an optional wheel cover element (not shown), thus facilitating and improving the axial positioning of such element.

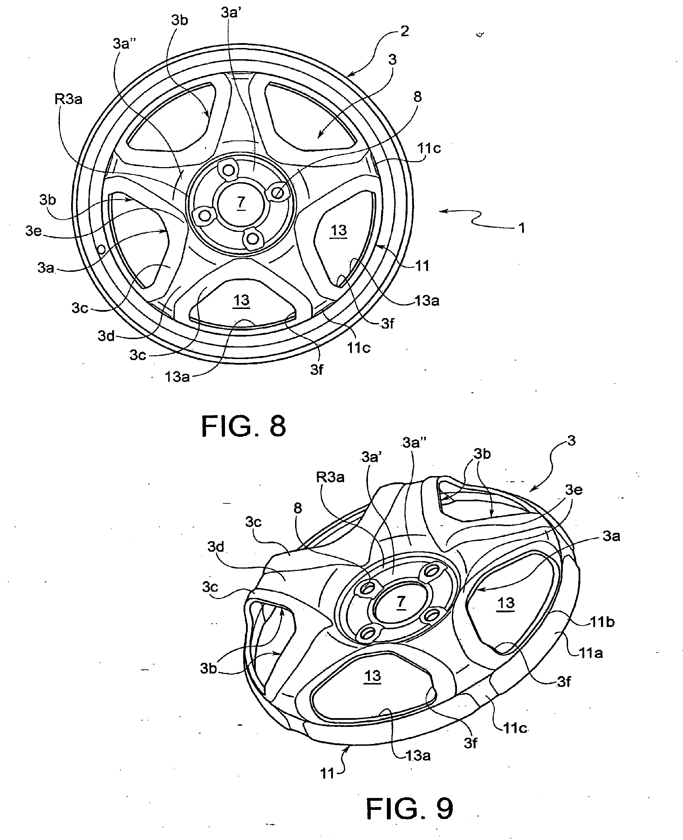

With reference to Figs. 8 and 9, another embodiment of the wheel according to the invention is illustrated. Corresponding elements have been assigned the same numeral references as the preceding embodiment. The object embodiment distinguishes itself from the preceding one in the configuration of the spokes, while, as regards the other aspects, it is substantially identical to the first one; therefore, for such aspects reference is made to the preceding description.

In the embodiment in the Figures 8 and 9, the spoke ribs 3c of each spoke form a more pronounced rib nose 3e compared to that of the embodiment illustrated above, but anyhow connected to the mounting portion 3a' through the connecting portion 3a". Therefore, also in this embodiment the rib nose 3e associated to each pair of spokes 3b does not reach the mounting portion 3a' in which the holes 8 are obtained, but tapers in the connecting portion 3a" surrounding the mounting portion.

Furthermore, the two spoke ribs 3c of each spoke end at the separating portion 11b of the connecting ring 11, and also the spoke web 3d interposed between the ribs ends at such separating portion 11b of the connecting ring 11.

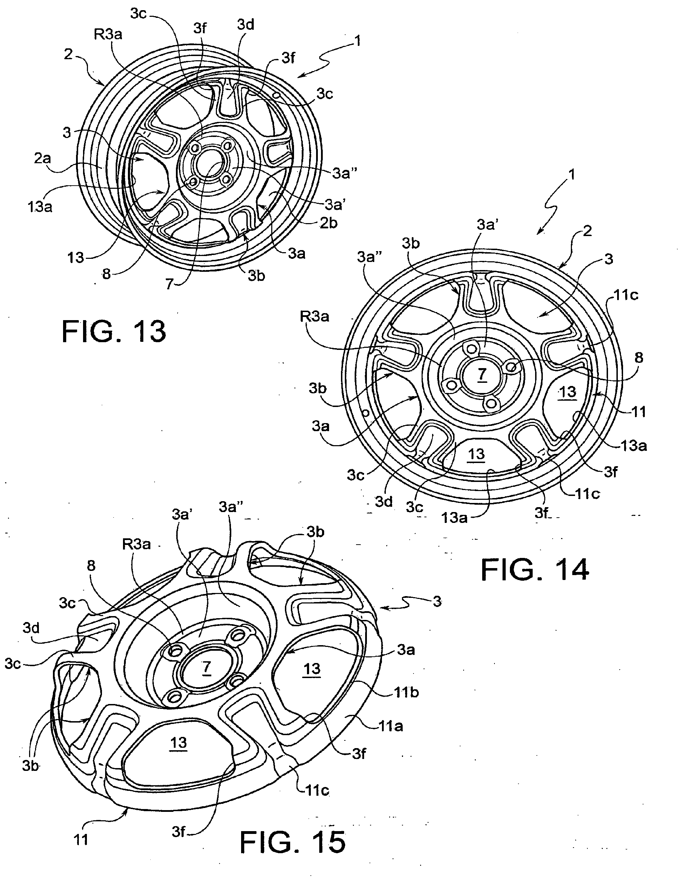

With reference to the Figs. 13 to 15, a further embodiment of the wheel according to the invention is illustrated. Corresponding elements have been assigned the same numeral references as the preceding embodiments. The object embodiment distinguishes itself from the preceding ones in the configuration of the spokes, while as regards the other aspects, it is substantially identical thereto, therefore, for such aspects reference is made to the description of the first embodiment.

In the embodiment in Figs. 13 to 15, the connecting portion 3a" extends axially until forming, at the level of the maximum axial distance from the mounting portion 3a', a circular ridge concentric with such mounting portion, with which the spoke ribs 3c are connected. Therefore, the ribs 3c do not form rib noses projecting towards the axis A-A of the wheel.

Furthermore, the two spoke ribs 3c of each spoke end at the separating portion 11b of the connecting ring 11, while the spoke web 3d interposed between the ribs extends in a respective one of the local deformations 11c obtained on the contact portion 11a of the connecting ring 11.

## Claims

1. A wheel (1) for vehicles comprising
a shaped rim (2) of metallic material, having an outer annular surface (2a) for supporting a tyre, and an inner annular surface (2b), the rim (2) having a cross-sectional profile including two lateral seats (4, 5), one axially internal and one axially external, respectively, which are intended to receive corresponding beads of a tyre, and having a central channel-like portion (6) recessed toward the axis (A-A) of the wheel, said central portion being bounded by two arcuate connecting portions (6a, 6b), one axially internal and one axially external, respectively, having their concave sides facing outwardly relative to the wheel;
a disk (3) produced as a single sheet-metal piece by forming and punching and having a central part (3a) adapted to be connected to an axle hub and from which a plurality of angularly spaced-apart spokes (3b) extend outwardly; each spoke comprising a pair of spoke ribs (3c) interconnected by a spoke web (3d); the outer ends of said spokes (3b) being interconnected by a peripheral connecting ring (11) which extends concentrically with the axis (A-A) of the wheel (1); said connecting ring (11) comprising a cylindrical contact portion (11a) which is substantially parallel to the axis (A-A) of the wheel (1) and which is fitted against the inner annular surface (2b) of the rim (2) at the central portion (6) thereof, and a separating portion (11b) axially adjacent to the contact portion (11a) and facing outwardly relative to the wheel (1); said separating portion (11b) having a curvilinear cross-sectional profile which converges toward the axis (A-A) of the wheel (1) from said contact portion (11a); corresponding windows (13) in the disk (3) being defined between the connecting ring (11) and pairs of adjacent spokes (3 b); the radially outer edge (13a) of said windows being defined by said separating portion (11b) of the connecting ring (11);
wherein said contact portion (11a) and, at least partially, said separating portion (11b) of the connecting ring (11) are arranged at a position axially inner than the axially external connecting portion (6b) adjacent to the central portion (6) of the rim (2);
wherein said central part (3a) of the disk (3) comprises a substantially flat mounting portion (3a') having a plurality of lug bolt receiving holes (8), and a connecting portion (3a") surrounding said mounting portion (3a'), wherein said mounting portion (3a') is substantially annulus-shaped in plan view, and said connecting portion (3a") defines a surface of revolution concentric with the axis (A-A) of the wheel (1) and having a curvilinear cross-sectional profile which extends axially outwardly relative to the wheel (1) from said mounting portion (3a'); and
wherein said spoke ribs (3c) are comprised between said connecting portion (3a") of the central part (3a) of the disk (3) and said separating portion (11b) of the connecting ring;
said wheel being **characterized in that** said contact portion (11a) of the connecting ring (11) has a plurality of angularly spaced-apart local deformations (11c) at which the profile of said contact portion (11a) is locally recessed toward the axis (A-A) of the wheel (1), defining thereby non-contact angular portions between the contact portion (11a) of the connecting ring (11) and the inner annular surface (2b) of the rim (2).

2. A wheel according to claim 1, wherein said separating portion (11b) has a double-bent cross-sectional profile which forms two bends having their concave sides facing toward the axis (A-A) of the wheel (1) and facing outwardly relative to the wheel, respectively.

3. A wheel according to any of the preceding claims, wherein said disk (3) is made integral with said rim (2) by means of a plurality of welding seams (11d), two of said welding seams (11d) being provided for each of said spokes (3b) which are arranged on opposite sides of the corresponding spoke (3b) with respect to the circumferential direction.

4. A wheel according to any of the preceding claims, wherein the outer end of each spoke (3b) is shaped at a bent zone thereof in such a way as to have side edge portions (3f) which, when viewed in plan, extend straight to said separating portion (11b) of the connecting ring (11) and define an angle > 0 with respect to a corresponding adjacent inner edge portion of said spoke (3b).

5. A wheel according to claim 4, wherein said windows (13) of the disk (3) are pseudo-pentagonal shaped with rounded corners when viewed in plan.

6. A wheel according to any of the preceding claims, wherein in each spoke (3b) said spoke ribs (3c) are arranged obliquely with respect to the radial centre line of the spoke (3b), when viewed in plan.

7. A wheel according to any of the preceding claims, wherein said contact portion (11a) of the connecting ring (11) of the disk (3) is arranged at a position axially inner than said mounting portion (3a') of the disk (3).

8. A wheel according to any of the preceding claims, wherein said spoke ribs (3c) extend radially inwardly to such an extent that the two spoke ribs (3c) bounding each of the windows (13) on opposite sides join together so as to form a rib nose (3e) projecting toward the axis (A-A) of the wheel and connected to the mounting portion (3a') through the connecting portion (3a").

9. A wheel according to any of the preceding claims, wherein said spokes (3b) are different in number from said holes (8) of the mounting portion (3a').

10. A wheel according to claim 9, wherein said holes (8) are angularly misaligned with respect to the radial centre lines of said spokes (3b).

11. A wheel according to any of the preceding claims, wherein on each spoke (3b) a locally flattened portion (3g) is formed at a peripheral zone thereof arranged at a position radially inner than said connecting ring (11).

12. A wheel according to any of the preceding claims, wherein said rim is produced by flow forming.

## Patentansprüche

1. Ein Rad (1) für Fahrzeuge, das folgende Merkmale aufweist:
eine geformte Felge (2) aus Metallmaterial, die eine äußere ringförmige Oberfläche (2a) zum Tragen eines Reifens und eine innere ringförmige Oberfläche (2b) aufweist, wobei die Felge (2) ein Querschnittsprofil aufweist, das zwei seitliche Auflagen (4, 5) umfasst, jeweils eine axial innen und eine axial außen, die dazu gedacht sind, entsprechende Wülste eines Reifens aufzunehmen, und einen mittleren kanalartigen Abschnitt (6) aufweist, der zu der Achse (A-A) des Rads hin ausgenommen ist, wobei der Mittelabschnitt durch zwei bogenförmige Verbindungsabschnitte (6a, 6b), jeweils einen axial innen und einen axial außen, begrenzt ist, deren konkave Seiten relativ zu dem Rad nach außen gerichtet sind;
eine Scheibe (3), die als Einzelblechstück hergestellt ist durch Bilden und Stanzen, und ein Mittelteil (3a) aufweist, das angepasst ist, um mit einer Achsnabe verbunden zu werden, und von dem sich eine Mehrzahl von winkelmäßig beabstandeten Speichen (3b) nach außen erstreckt; jede Speiche weist ein Paar von Speichenrippen (3c) auf, die durch ein Speichennetz (3d) miteinander verbunden sind; wobei die äußeren Enden der Speichen (3b) durch einen Umfangsverbindungsring (11), der sich konzentrisch mit der Achse (A-A) des Rads (1) erstreckt, miteinander verbunden sind; wobei der Verbindungsring (11) einen zylindrischen Kontaktabschnitt (11a) aufweist, der im Wesentlichen parallel zu der Achse (A-A) des Rads (1) ist, und der gegen die innere ringförmige Oberfläche (2b) der Felge (2) an dem Mittelabschnitt (6) derselben angepasst ist, und einen Trennabschnitt (11 b) axial benachbart zu dem Kontaktabschnitt (11a), und der nach außen gerichtet ist relativ zu dem Rad (1); wobei der Trennabschnitt (11 b) ein krummliniges Querschnittsprofil aufweist, das von dem Kontaktabschnitt (11a) zu der Achse (A-A) des Rads (1) hin konvergiert; wobei entsprechende Fenster (13) in der Scheibe (3) zwischen dem Verbindungsring (11) und Paaren von benachbarten Speichen (3b) definiert sind; wobei der radial äußere Rand (13a) der Fenster durch den Trennabschnitt (11 b) des Verbindungsrings (11) definiert ist;
wobei der Kontaktabschnitt (11a) und zumindest teilweise der Trennabschnitt (11b) des Verbindungsrings (11) an einer Position axial weiter innen angeordnet sind als der axial äußere Verbindungsabschnitt (6b) benachbart zu dem Mittelabschnitt (6) der Felge (2);
wobei das Mittelteil (3a) der Scheibe (3) einen im Wesentlichen flachen Befestigungsabschnitt (3a') mit einer Mehrzahl von Radbolzenaufnahmelöchern (8) und einen Verbindungsabschnitt (3a") aufweist, der den Befestigungsabschnitt (3a') umgibt, wobei der Befestigungsabschnitt (3a') in der Draufsicht im Wesentlichen ringförmig ist, und der Verbindungsabschnitt (3a") eine Oberfläche einer Drehung konzentrisch mit der Achse (A-A) des Rads (1) definiert und ein krummliniges Querschnittsprofil aufweist, das sich relativ zu dem Rad (1) von dem Befestigungsabschnitt (3a') axial nach außen erstreckt; und
wobei die Speichenrippen (3c) zwischen dem Verbindungsabschnitt (3a") des Mittelteils (3a) der Scheibe (3) und dem Trennabschnitt (11 b) des Verbindungsrings eingeschlossen sind; wobei das Rad **dadurch gekennzeichnet ist, dass**
der Kontaktabschnitt (11a) des Verbindungsrings (11) eine Mehrzahl von winkelmäßig beabstandeten lokalen Deformationen (11c) aufweist, an denen das Profil des Kontaktabschnitts (11a) zu der Achse (A-A) des Rads (1) hin lokal ausgenommen ist, wodurch zwischen dem Kontaktabschnitt (11a) des Verbindungsrings (11) und der inneren ringförmigen Oberfläche (2b) der Felge (2) Nichtkontaktwinkelabschnitte definiert sind.

2. Ein Rad gemäß Anspruch 1, bei dem der Trennabschnitt (11b) ein doppelt gebogenes Querschnittsprofil aufweist, das zwei Biegungen bildet, deren konkave Seiten der Achse (A-A) des Rads (1) zugewandt sind beziehungsweise relativ zu dem Rad nach außen gerichtet sind.

3. Ein Rad gemäß einem der vorhergehenden Ansprüche, bei dem die Scheibe (3) durch eine Mehrzahl von Schweißnähten (11d) mit der Felge (2) einstückig gebildet ist, wobei zwei der Schweißnähte (11 d) für jede der Speichen (3b) vorgesehen sind, die auf gegenüberliegenden Seiten der entsprechenden Speichen (3b) in Bezug auf die Umfangsrichtung angeordnet sind.

4. Ein Rad gemäß einem der vorhergehenden Ansprüche, bei dem das äußere Ende jeder Speiche (3b) an einer gebogenen Zone derselben geformt ist, um Seitenkantenabschnitte (3f) aufzuweisen, die sich in der Draufsicht gerade zu dem Trennabschnitt (11 b) des Verbindungsrings (11) erstrecken und einen Winkel > 0 definieren in Bezug auf einen entsprechenden benachbarten Innenkantenabschnnitt der Speiche (3b).

5. Ein Rad gemäß Anspruch 4, bei dem die Fenster (13) der Scheibe (3) in der Draufsicht pseudopentagonalförmig sind mit abgerundeten Ecken.

6. Ein Rad gemäß einem der vorhergehenden Ansprüche, bei dem in jeder Speiche (3b) die Speichenrippen (3c) in der Draufsicht schräg angeordnet sind in Bezug auf die radiale Mittellinie der Speiche (3b).

7. Ein Rad gemäß einem der vorhergehenden Ansprüche, bei dem der Kontaktabschnitt (11a) des Verbindungsrings (11) der Scheibe (3) an einer Position axial weiter innen angeordnet ist als der Befestigungsabschnitt (3a') der Scheibe (3).

8. Ein Rad gemäß einem der vorhergehenden Ansprüche, bei dem die Speichenrippen (3c) sich radial nach innen erstrecken zu solch einem Ausmaß, dass die zwei Speichenrippen (3c), die jedes der Fenster (13) auf gegenüberliegenden Seiten begrenzen, sich miteinander verbinden, um eine Rippennase (3e) zu bilden, die zu der Achse (A-A) des Rads hin vorsteht und durch den Verbindungsabschnitt (3a") mit dem Befestigungsabschnitt (3a') verbunden ist.

9. Ein Rad gemäß einem der vorhergehenden Ansprüche, bei dem die Speichen (3b) sich in der Anzahl von den Löchern (8) des Befestigungsabschnitts (3a') unterscheiden.

10. Ein Rad gemäß Anspruch 9, bei dem die Löcher (8) winkelmäßig fehlausgerichtet sind in Bezug auf die radialen Mittellinien der Speichen (3b).

11. Ein Rad gemäß einem der vorhergehenden Ansprüche, bei dem auf jeder Speiche (3b) ein lokal abgeflachter Abschnitt (3g) gebildet ist an einer Umfangszone derselben, angeordnet an einer Position radial weiter innen als der Verbindungsring (11).

12. Ein Rad gemäß einem der vorhergehenden Ansprüche, bei dem die Felge durch Fließformen hergestellt ist.

## Revendications

1. Roue (I) de véhicule comprenant
une jante façonnée (2) métallique, possédant une surface annulaire extérieure (2a), destinée à servir de support à un pneu, et une surface annulaire intérieure (2b), la jante (2) possédant un profil transversal comprenant deux logements latéraux (4, 5), respectivement un axialement interne et un axialement externe, prévus pour recevoir les talons correspondants d'un pneu, et possédant une partie centrale en forme de canal (6) en creux vers l'axe (A-A) de la roue, ladite partie centrale étant bordée par deux parties de liaison courbées (6a, 6b), respectivement une axialement interne et une axialement externe, dont les faces concaves sont orientées vers l'extérieur par rapport à la roue,
un disque (3) réalisé sous la forme d'une pièce de tôle métallique unique par formage et découpage et possédant une partie centrale (3a) adaptée pour être reliée à un moyeu et duquel part un ensemble de rayons espacés angulairement (3b) allant vers l'extérieur, chaque rayon comprenant une paire de nervures (3c) interconnectées par une âme (3d), les extrémités extérieures desdits rayons (3b) étant interconnectées par une bague de raccordement périphérique (11) qui est concentriquement dans le prolongement de l'axe (A-A) de la roue (1), ladite bague de raccordement (11) comprenant une partie de contact cylindrique (11a) sensiblement parallèle à l'axe (A-A) de la roue (1) et appuyant contre la surface annulaire intérieure (2b) de la jante (2) à sa partie centrale (6) et une partie de séparation (11b) axialement adjacente à la partie de contact (11a) et orientée vers l'extérieur par rapport à la roue (1), ladite partie de séparation (11b) possédant un profil transversal curviligne qui converge vers l'axe (A-A) de la roue (1) à partir de ladite partie de contact (11a), des parties ajourées correspondantes (13) dans le disque (3) étant définies entre la bague de raccordement (11) et les paires de rayons adjacents (3b), le bord extérieur radialement (13a) desdites parties ajourées étant défini par ladite partie de séparation (11b) de la bague de raccordement (11),
dans laquelle ladite partie de contact (11a) et, au moins partiellement, ladite partie de séparation (11b) de la bague de raccordement (11) sont situées dans une position axialement plus à l'intérieur que la partie de raccordement axialement externe (6b) adjacente à la partie centrale (6) de la jante (2),
dans laquelle ladite partie centrale (3a) du disque (3) comprend une partie de fixation (3a') sensiblement plate possédant un ensemble de trous pour les boulons de fixation (8) et une partie de raccordement (3a") autour de ladite partie de fixation (3a'), dans laquelle ladite partie de fixation (3a') est sensiblement annulaire en vue de dessus et ladite partie de raccordement (3a") définit une surface de révolution concentrique avec l'axe (A-A) de la roue (1) et possédant un profil transversal curviligne qui est orienté axialement vers l'extérieur par rapport à la roue (1) à partir de ladite partie de fixation (3a') et
dans laquelle lesdites nervures (3c) sont situées entre ladite partie de raccordement (3a") de la partie centrale (3a) du disque (3) et ladite partie de séparation (11b) de la bague de raccordement,
ladite roue étant **caractérisée en ce que** ladite partie de contact (11a) de la bague de raccordement (11) possède un ensemble de déformations locales espacées angulairement (11c) où le profil de ladite partie de contact (11a) est localement en creux vers l'axe (A-A) des roue (1), définissant ainsi des parties angulaires sans contact entre la partie de contact (11a) de la bague de raccordement (11) et la surface annulaire intérieure (2b) de la jante (2).

2. Roue selon la revendication 1, dans laquelle ladite partie de séparation (11b) possède un profil transversal à double courbe qui forme deux courbes dont les faces concaves sont respectivement orientées en direction de l'axe (A-A) de la roue (1) et orientées vers l'extérieur par rapport à la roue.

3. Roue selon une des revendications précédentes, dans laquelle ledit disque (3) est solidaire de ladite jante (2) par un ensemble de cordons de soudure (11d), deux desdits cordons de soudure (11d) étant réalisés pour chacun desdits rayons (3b) qui sont disposés sur les côtés opposés du rayon correspondant (3b) par rapport à la circonférence.

4. Roue selon une des revendications précédentes, dans laquelle l'extrémité extérieure de chaque rayon (3b) est façonnée dans une zone courbe de la roue de manière à avoir des parties marginales latérales (3f) qui, quand elles sont vues de dessus, se prolongent tout droit jusqu'à ladite partie de séparation (11b) de la bague de raccordement (11) et définissent un angle > 0 par rapport à une partie marginale intérieure adjacente correspondante dudit rayon (3b).

5. Roue selon la revendication 4 dans laquelle lesdites parties ajourées (13) du disque (3) sont de forme pseudo-pentagonale avec des angles arrondis en vue de dessus.

6. Roue selon une des revendications précédentes, dans laquelle, dans chaque rayon (3b), lesdites nervures (3c) sont disposées obliquement par rapport à la ligne radiale centrale du rayon (3b), en vue de dessus.

7. Roue selon une des revendications précédentes, dans laquelle ladite partie de contact (11a) de la bague de raccordement (11) du disque (3) est située dans une position axialement plus à l'intérieur que ladite partie de fixation (3a') du disque (3).

8. Roue selon une des revendications précédentes, dans laquelle lesdites nervures (3c) se prolongent radialement vers l'intérieur de telle manière que les deux nervures (3c) délimitant chacune des parties ajourées (13) sur les faces opposées se rejoignent pour former un nez de nervure (3e) s'étendant vers l'axe (A-A) de la roue et relié à la partie de fixation (3a') par la partie de raccordement (3a").

9. Roue selon une des revendications précédentes, dans laquelle le nombre desdits rayons (3b) est différent du nombre desdits trous (8) de la partie de fixation (3a').

10. Roue selon la revendication 9, dans laquelle lesdits trous (8) sont décentrés angulairement par rapport aux lignes radiales centrales desdits rayons (3b).

11. Roue selon une des revendications précédentes, dans laquelle, sur chaque rayon (3b), une partie localement aplatie (3g) est formée dans une zone périphérique de la roue dans une position radialement plus à l'intérieur que ladite bague de raccordement (11).

12. Roue selon une des revendications précédentes, dans laquelle ladite jante est produite par fluotournage.
